(19) Europäisches Patentamt
European Patent Office
Office européen des brevets

(11) **EP 2 656 718 B1**

(12) **EUROPEAN PATENT SPECIFICATION**

(45) Date of publication and mention
of the grant of the patent:
**04.07.2018 Bulletin 2018/27**

(51) Int Cl.:
*A01D 34/00* *(2006.01)*          *B60L 11/18* *(2006.01)*
*G05D 1/02* *(2006.01)*          *A47L 9/28* *(2006.01)*

(21) Application number: **12165344.8**

(22) Date of filing: **24.04.2012**

(54) **A ground care apparatus and a charging station apparatus therefor**

Bodenpflegeapparat und Ladestationsvorrichtung dafür

Appareil d'entretien du sol et appareil de station de charge associé

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**30.10.2013 Bulletin 2013/44**

(73) Proprietor: **ROBERT BOSCH GMBH
70442 Stuttgart (DE)**

(72) Inventor: **Marshall, Lewis
Leicestershire, LE65 2LG (GB)**

(56) References cited:
**EP-A2- 2 375 301          DE-U1-202011 050 877
US-A- 5 272 431          US-A- 5 646 494
US-A- 5 682 640          US-A1- 2009 315 501**

## Description

The present invention relates to a ground care apparatus and a charging station apparatus therefor. In the arrangement to be described, the ground care apparatus may be a lawn mower and in particular an autonomous ("robot") lawn mower but the principles may be applied to other apparatus.

## Background to the invention.

Robot lawn mowers are well-known. In essence, they comprise an autonomous mower which is normally battery operated and typically includes a pair of driven wheel at the rear and one or two castor wheels at the front. In addition to the mower there is provided a charging station where the mower can return, connect to the charging station and recharge the battery. The charging station, sometimes referred to as a docking station, is generally provided with a base plate on which the lawn mower may sit and upstanding from one end of that base plate a docking arrangement to which the mower may attach itself for recharging. The mower may be guided in the vicinity of the charging station by a buried cable, but other ways of doing so may be used. Thus the mower, once it has mowed an area of lawn, will return to the charging station, drive itself onto the base plate, and engage automatically with the charging apparatus.

Problems in this mechanical arrangement can arise. Firstly, particularly because of debris and grass cuttings, etc. on the base plate, the height of the part of the mower which connects with the charger may vary.

Furthermore, of more difficulty, the mower may approach at a somewhat different angle. Although it will follow the buried wire to the charging station, it does not necessarily move in a smooth direction because it has castor wheels which can allow it to wobble a little from side-to-side. Thus, horizontal misalignments must also be catered for.

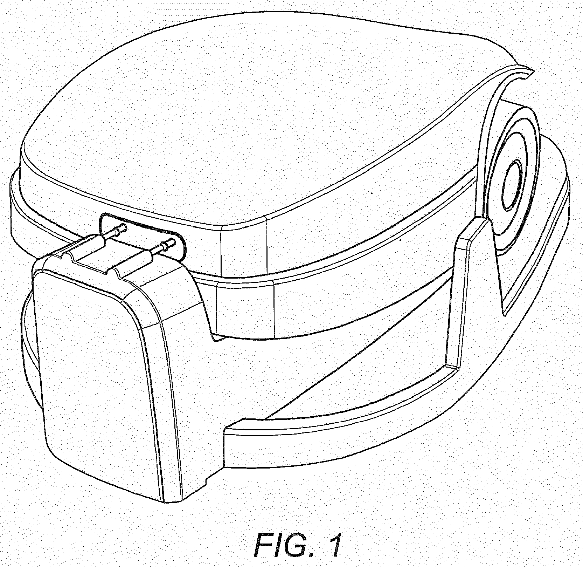

In a typical generic prior arrangement shown in Figure 1, electrical pins which provide the necessary power from the charging station to the lawnmower are exposed to the elements, whilst the mower is not engaged with the charging station.

US-A-5,272,431 (Nee) discloses a docking station for an electric vehicle having a conical passageway for guiding a plug on the vehicle to the electrical outlet.

Horizontal misalignments of the mower with respect to the charging station axis may be dealt with by means of providing upright guides on the base plate. However if the mower is displaced too far to one side of the axis of the charging station, it may need physically moving across to the axis and the use of side guide plates on the base plate may thereby create provide sufficient friction that the lawnmower cannot move properly into engagement with the charging station.

We provide an arrangement which allows for the height differential between the charging station and the lawnmower, and does not require mouldings on the side of the base plate to guide the lawnmower.

## Statements of the invention

It will be understood therefore that the invention or preferred embodiments of the invention deal with or alleviate the described technical problems referred to above.

The present invention provides a ground care apparatus and a charging station apparatus therefor, in which: a first of the two apparatuses mounts a pair of substantially upright opposed guide surfaces, inner ends of which are separated by a contact socket apparatus including a contact socket, and outer ends of which are further apart than the inner ends, and the second of the two apparatuses mounts a contact pin which extends generally horizontally from said apparatus, wherein said contact pin comprises opposite generally upright side surfaces and said contact socket comprises two upright contact surfaces for engaging and electrically contacting a relevant upright side surface of said contact pin, the two contact surfaces being resiliently urged together by resilient means, wherein said ground care apparatus and said charging station apparatus are adapted so that they move or are moved to engage with one another and engage said contact pin in said contact socket, and if the two apparatuses are misaligned horizontally, said contact pin engages a relevant guide surface so that the contact pin and contact socket are relatively guided into engagement, and wherein the depth of the two upright contact surfaces is at least twice the depth of the contact pin to allow for vertical misalignment.

Preferably the depth of the two upright contact surfaces is approximately 3 times the depth of the contact pin to allow for vertical misalignment. (Through this specification we will refer to "depth" of various components as being the vertical distance between their upper and lower limits).

Preferably the depth of said guide surface is substantially the same as the depth of the contact socket and the distance between the outer ends of said guide surfaces is at least 1 $^2/_3$ (1.67) times their depth.

In a preferred arrangement, the second of said two apparatuses includes contact pin support means and an exposed end of said contact pin extends generally horizontally from said apparatus, said exposed end of said contact pin extending from said apparatus by a first length $l1$ and the remainder of said contact pin being supported by said support means over a second distance $l2$ wherein

$$l1/l2 < 0.5,$$

so that the contact pin it is robustly supported. Preferably $l1$ is substantially 25mm and $l2$ is substantially 85mm.

Preferably there are provided two contact pins and two contact sockets and two sets of guide surfaces to provide for the simultaneous engagement of the two contact pins in the two contact sockets, and said contact pins are provided on said charging station apparatus and said guide surfaces and said contact sockets are provided on said ground care apparatus.

Preferably, when the ground care apparatus is engaged with the charging station apparatus, the or each contact pin and the or each contact socket apparatus are surrounded by parts of the ground care apparatus and charging station apparatus so that they cannot be touched by a user.

Thus we have provided an arrangement in which the vertical misalignment is dealt with by having a pin and contact arrangement which allows for vertical misalignment and horizontal misalignment is dealt with by moving the front of the ground care apparatus horizontally using the castor wheels and by engaging a part of the front of the apparatus with upright guide surfaces on the other apparatus..

**Brief description of the drawings**

Preferred embodiments of the invention will now be described by way of example only and with reference to the accompanying drawings in which:

Figure 1 is a perspective view of a prior arrangement of robot lawnmower and charging station;

Figure 2 is a perspective view of a robot lawnmower engaged with a charging station in accordance with a preferred embodiment of the present invention;

Figure 3 shows a perspective view of part of the charging station without a lawnmower in engagement;

Figure 4 shows an enlarged cut away of the robot lawnmower and charging station of Figure 2;

Figure 5 is a cutaway of part of the lawnmower and charging station, the section being a horizontal section;

Figure 6 is a vertical section similar to Figure 5 but wherein the section is vertical;

Figure 7 is a diagrammatic cutaway view of part of the apparatus shown in Figure 5, and

Figure 8 is an enlarged detail of part of Figure 5.

**Detailed description of the preferred embodiments**

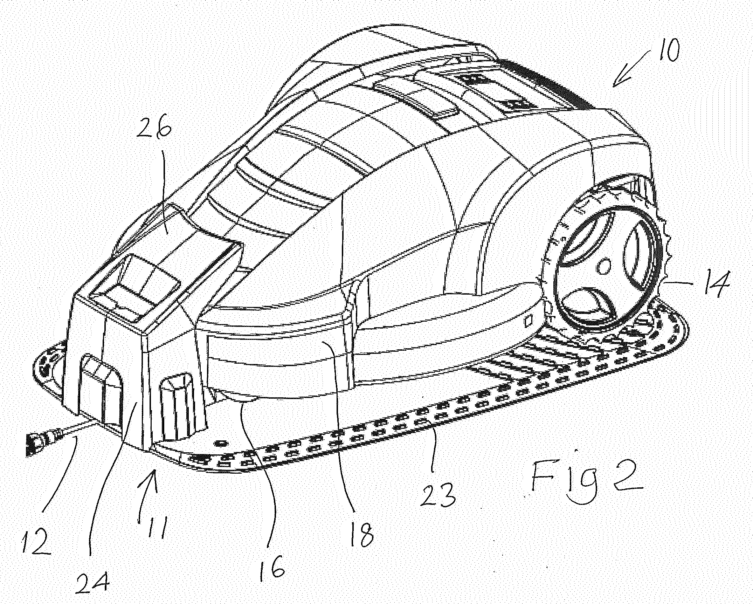

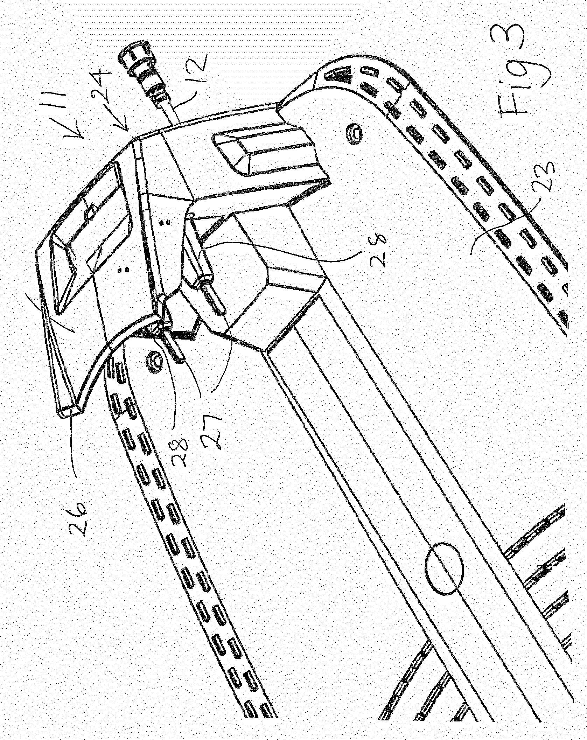

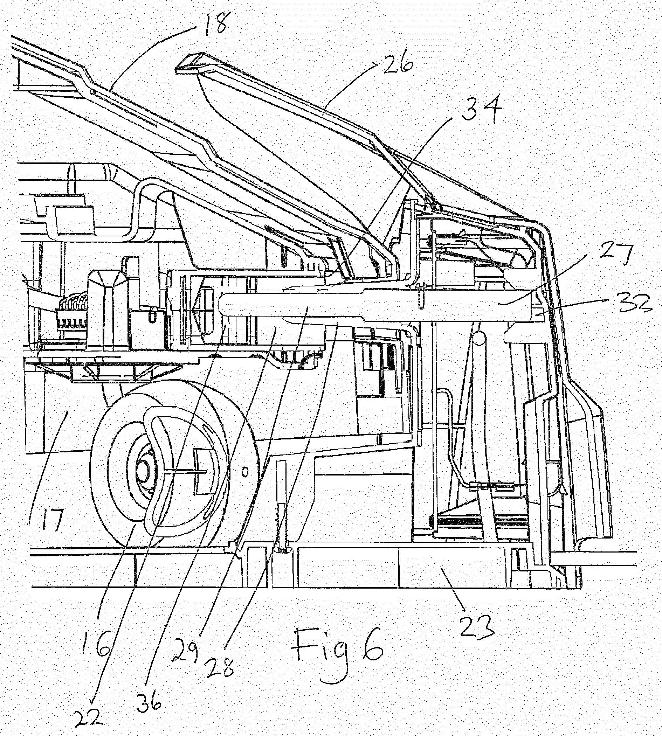

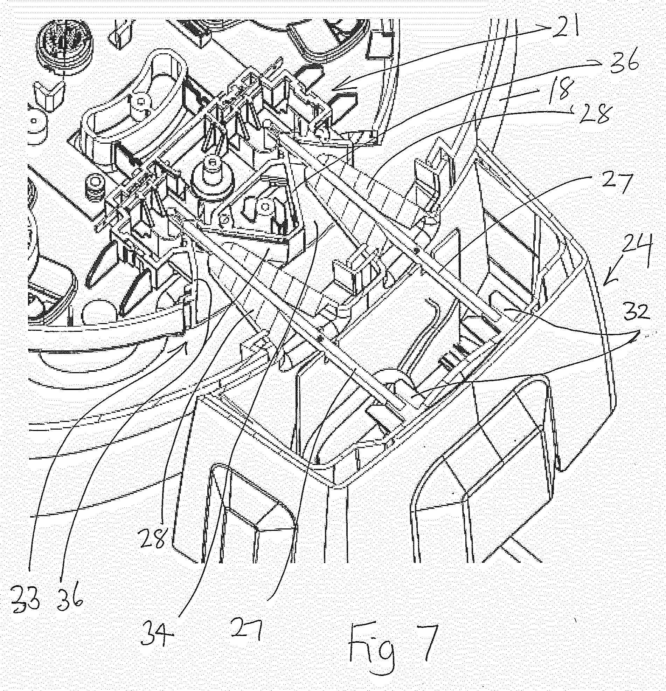

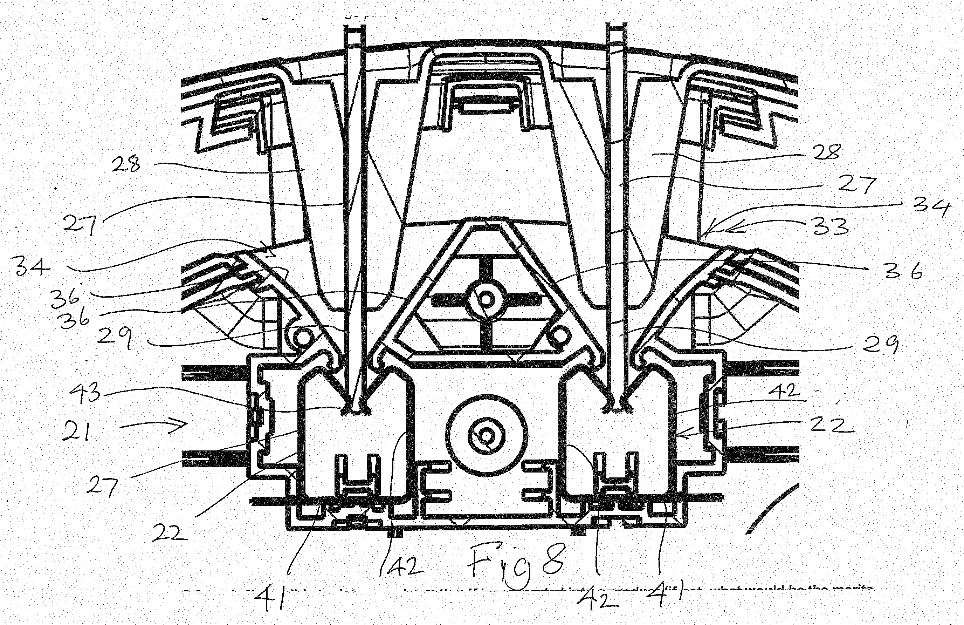

Referring to Figures 2 to 8, there is shown an autonomous ground-care apparatus in the form of a so-called robot lawnmower 10 and a charging station 11. In Figure 2 the lawnmower 10 is engaged with the charging station 11. The charging station 11 is normally connected to the mains electric power supply by means of a cable 12. The robot lawnmower incorporates a battery (not shown), and is driven by independently rotatable rear drive wheels 14. Underneath the front of the lawnmower 10 there are mounted two castor wheels 16, only one of which is shown. The construction of the lawnmower 10 basically comprises a chassis unit 17 which mounts the wheels, battery, blades and motors, and a shell cover 18. The shell cover 18 is mounted flexibly to the chassis unit 17, as will be understood later.

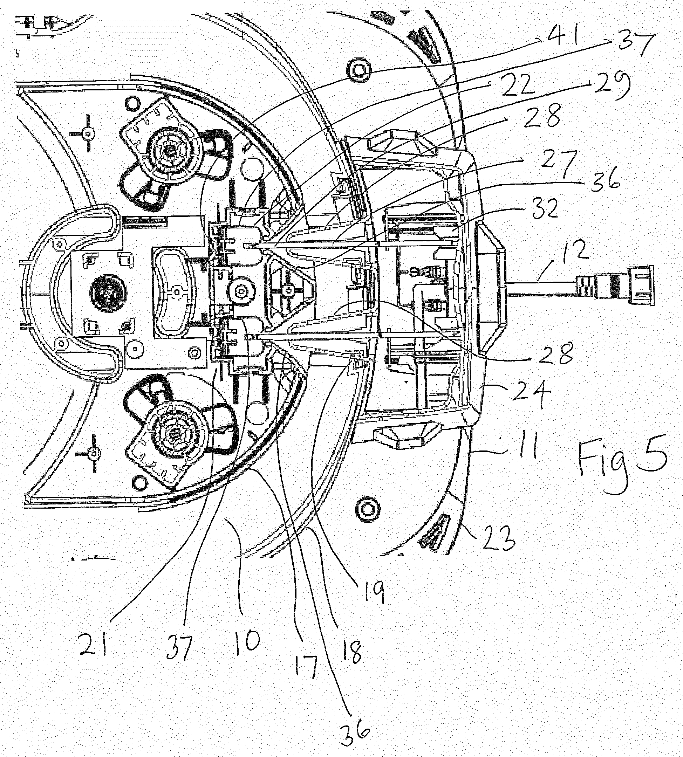

Behind two slots 19 through the front of the shell cover 18 (see Figures 5, 6 and 7), there is mounted a contact apparatus 21 which mounts a pair of contacts 22.

The charging station 11 comprises a base plate 23 to one end which is an upright housing 24 mounting a weather protective cover 26. A pair of pins 27 spaced apart the same distance as the contacts 22 project from the upright housing 24. The pins are mounted in square section pyramid shaped supports 28.

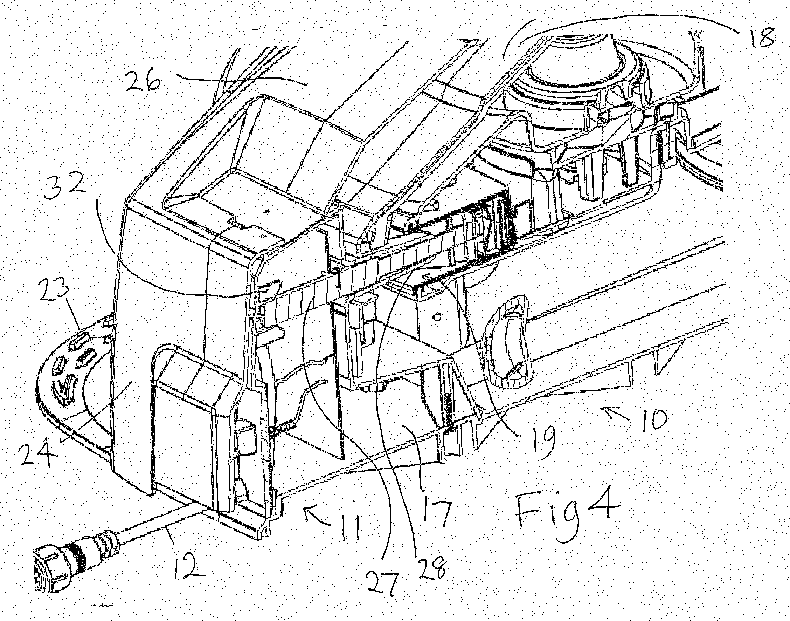

The upright housing 24 houses electrical connections to the cable 12 and electrical connections to the perimeter wire and guide wire (not shown). As is clear from Figure 4, the pins 27 are flat pins, having an overall rectangular cross-section with parallel side surfaces, the depth of each pin 27 being approximately 10mm and the width approximately 4mm. Projecting ends 29 of the pins 27 are chamfered so as to allow smooth engagement with contacts 22.

In addition to being supported by the pin supports 28, the ends of the pins 27 opposite their protruding ends 29 are mechanically held in a further pin support 32. Each pin's overall length is approximately 110mm it is supported (by supports 28, 32) at two positions spaced by $l2$ of approximately 85mm apart, leaving a projecting pin portion length $l1$ of approximately 25mm. Values of $li/l2 < 0.5$ are preferred and in this example $l1/l2 = 0.29$. This provides extremely robust mounting for the pins, particularly in the horizontal planes as the side surfaces of the pin are large. The pins are of rigid metal.

Returning to the robot lawnmower 10, the front of the shell cover 18 includes two slots 19 already referred to, and behind each slot 19 is provided a guide apparatus 33 to guide the projecting end of a relevant pin 27 into engagement with the relevant contact 22 when the lawnmower 10 is moving into engagement with the charging station 11. Thus the guide apparatus extends rearwardly from the relevant slot 19, and a similar opening 34 in the chassis unit 17 and includes a pair of opposed generally upright guide surfaces 36 which extend from opposite horizontal sides of the opening 34 to the part of the contact 22 which the pin 27 is to engage. In plan, as shown in Figure 5, the two guide surfaces 36 form a 'V' from the opening 34 to the mouth of the contact 22. The distance between the outer ends of said guide surfaces is at least 1 $2/3$ (1.67) times their depth. In this embodiment, the depth of each guide surface is approximately 30mm and the distance between their front (outer) ends is approximately 50mm.

The contacts 22 are formed of sprung stainless steel, having a base 41 for attachment to the contact apparatus 21, two forwardly projecting side walls 42, the forward ends of which are curved round so as to engage with one another to form upright contact surfaces 43 with which the pin may engage and form a suitable electrical contact. The contact is resilient so that the two contact surfaces 43 are urged towards one another to provide a firm contact with the side surfaces of the pin. The depth of the contact surfaces is approximately 30mm. Thus the depth of the contact surfaces is at least twice and is preferably substantially 3 times the depth of the side surfaces of the pin. Thus the pin 27 and contact surfaces 43 may be misaligned vertically by 20mm and the pins still have full contact with the contact surfaces (i.e. full overlap).

An electrical cable passes from each contact 22 to the battery mounted within the mower 10.

As is known from prior arrangements, in use the robot lawnmower is used to cut a lawn automatically without intervention of a person.

The area to be cut is defined by installing a signal wire around the perimeter of the area of lawn to be cut. Generally the perimeter wire and guide wire will be connected to the charging station 11 by a section which runs along a line on the axis of the base plate 23.

The lawnmower 10 is set in motion and proceeds to cut the lawn appropriately. Either when the job is finished, or when it senses that the battery power is low, the lawnmower 10 returns to the charging station 11 using sensors to follow the perimeter wire. As it approaches the base station, the perimeter wire runs along the axis of the base plate so that the lawnmower 10 approaches the charging station 11 along its axis. As a result, it will approach the charging station 11 with the guide apparatus 33 of the mower 10 generally aligned with the pins 27 of the charging station 11.

However, there is likely to be some horizontal misalignment (up to 15mm on each side of the charging station axis) and indeed vertical misalignment (up to 10 mm up or down about a centre line). The vertical misalignment should be smaller since the lawnmower is travelling across the base plate 23. However, there may be some debris on the base plate 23 and the small vertical misalignment can be compensated by the vertical extent of the contacts 22 with respect to the upright nature of the pins 27.

So far as horizontal misalignment is concerned, as the mower 10 approaches the upright housing 24 the pins 27 will engage with one or other of the guide surfaces 36 and will guide the mower 10 via the guide surfaces 36 so as to slide into engagement with the relevant contact 22. Because the front wheels of the mower 10 are castor wheels, the front end of the mower can be moved from side-to-side readily by engagement of the pins and guide surfaces without undue strain on either the pins or the guide surfaces. As the mower 10 is driven further forwards, the pins and contacts slide into engagement with each other, and this sliding motion helps to clean dirt from the contact side surfaces of the pins.

So long as the mower battery is live and therefore moving under its own control it may be controlled as follows. The pins 27 carry a permanent identification signal. This is detected by the mower and with a predetermined delay after first detecting the signal, the mower stops the motors thereby allowing full engagement of the pins with the contacts.

If this should fail, there is provided a mechanical contact which contacts the shell cover 18. As will be understood, the shell cover 18 is flexibly connected to the chassis unit 17 and movement of the shell cover 18 with respect to the chassis unit 17 causes the mower to stop. This is generally used to detect and avoid trees and other items on the lawn but in this case is used to stop the mower if it fails to detect the permanent identification signal.

If this arrangement also fails, there is mechanical stop by mechanical engagement of the outer end of the or each pyramid shaped pin support 28 with the guide surfaces 36 before the pins 27 hit a part of the mower behind the contacts 22..

If the mower battery is dead then a special flat battery recovery sequence will be triggered by the dock detecting the magnet embedded in the front of the mower floating shell. In this scenario insertion of the mower onto the dock by hand will be limited by the mechanical stop only.

Once docked a charging voltage is applied to the charge pins 27 and the mower 10 can recharge accordingly. At no point once docked can the live pins 27 or contacts 22 be touched or contacted by the user as they are shielded away by the cover 26, the outer shell 18, and the upright housing 24.

Advantages of the described preferred embodiment of the invention include:-allowance for height differential between mower 10 and pins 27 during engagement, no need for mouldings on base plate to mechanically guide the mower,

the guide apparatus and in particular the guide surfaces correct horizontal misalignment during the docking process,

the design of guide apparatus pulls the mower into line before the pins 27 contact the contacts 22,

the charge pin housing on the docking station also acts as a mechanical stop to prevent any undue damage to them or charging station if the charge contacts overrun, or software recognition of a docking event failure should occur,

the metallic pins and contacts are housed deep inside machine, reducing the risk of accidental access,

the contacts 22 slide onto, and travels down the sides of the pins to provide a "self cleaning action" to ensure a robust electrical connection,

once the charging station pins and charge contact housing are engaged there is no possibility to access the connection, thus creating a safe electronic connection to transfer the battery recharge voltage.

The invention is not limited to the detail of the foregoing examples.

For example, the pins etc may be mounted on the mower 10 and the guide apparatus 33 mounted on the charging station.

**Claims**

1. A ground care apparatus (10) and a charging station apparatus (11) therefor, in which:

   a first of the two apparatuses mounts a contact socket apparatus (21) including a contact socket (22), and
   the second of the two apparatuses mounts a contact pin (27) which extends generally horizontally from said apparatus,
   wherein said ground care apparatus (10) and said charging station apparatus (11) are adapted so that they move or are moved to engage with one another and engage said contact pin (27) in said contact socket (22), and if the two apparatuses are misaligned horizontally, said contact pin (27) engages a relevant guide surface (36) so that the contact pin (27) and contact socket (22) are relatively guided into engagement, **characterised in that,**
   the first of the two apparatuses mounts a pair of substantially upright opposed guide surfaces (36), inner ends of which are separated by said contact socket apparatus (21) including a contact socket (22), and outer ends of which are further apart than the inner ends, and
   wherein said contact pin (27) comprises opposite generally upright side surfaces and said contact socket (22) comprises two upright contact surfaces (43) for engaging and electrically contacting a relevant upright side surface of said contact pin (27), the two contact surfaces (43) being resiliently urged together by resilient means,
   and wherein the depth of the two upright contact surfaces (43) is at least twice the depth of the contact pin (27) to allow for vertical misalignment.

2. A ground care apparatus and a charging station apparatus as claimed in claim 1 in which the depth of the two upright contact surfaces (43) is approximately 3 times the depth of the contact pin (27) to allow for vertical misalignment.

3. A ground care apparatus and a charging station apparatus as claimed in claim 1 or 2, in which the depth of said guide surface (36) is substantially the same as the depth of the contact socket (22) and the distance between the outer ends of said guide surfaces is at least 1 $^2/_3$ (1.67) times their depth.

4. A ground care apparatus and a charging station apparatus as claimed in any preceding claim, in which the second of said two apparatuses includes contact pin support means (28) and an exposed end (29) of said contact pin (27) extends generally horizontally from said apparatus, said exposed end (29) of said contact pin extending from said apparatus by a first length *l1* and the remainder of said contact pin being supported by said support means (28) over a second distance *l2* wherein

$$l1/l2 < 0.5,$$

   so that the contact pin it is robustly supported.

5. A ground care apparatus and a charging station apparatus as claimed in claim 4 in which *l1* is substantially 25mm and *l2* is substantially 85mm.

6. A ground care apparatus and a charging station apparatus as claimed in any preceding claim, in which there are provided two contact pins (27) and two contact sockets (22) and two sets of guide surfaces (36) to provide for the simultaneous engagement of the two contact pins in the two contact sockets, and said contact pins are provided on said charging station apparatus (11) and said guide surfaces (36) and said contact sockets (22) are provided on said ground care apparatus (10).

7. A ground care apparatus and a charging station apparatus as claimed in any preceding claim, in which, when the ground care apparatus (10) is engaged with the charging station apparatus (11), the or each contact pin (27) and the or each contact socket apparatus (21) are surrounded by parts of the ground care apparatus (10) and charging station apparatus (11) so that they cannot be touched by a user.

**Patentansprüche**

1. Bodenpflegegerät (10) und Ladegerät (11) dafür, wobei:

   das erste der beiden Geräte mittels einer Steckbuchsenvorrichtung (21) andockt, welche mit einer Steckbuchse (22) ausgestattet ist, und
   das zweite der beiden Geräte mittels eines Kontaktstifts (27) andockt, welcher aus dem Gerät im Allgemeinen horizontal herausragt,

wobei das Bodenpflegegerät (10) und das Ladegerät (11) so ausgebildet sind, dass sie sich so bewegen oder bewegt werden, dass sie in Eingriff miteinander gelangen und der Kontaktstift (27) in die Steckbuchse (22) eingreift und dass bei einer horizontalen Fehlausrichtung der beiden Geräte der Kontaktstift (27) eine entsprechende Führungsfläche (36) so erfasst, dass der Kontaktstift (27) und die Steckbuchse (22) relativ zueinander zum Eingriff geführt werden, **dadurch gekennzeichnet, dass**

das erste der beiden Geräte mittels eines Paares im Wesentlichen aufrechter, einander gegenüberliegender Führungsflächen (36) andockt, deren innere Enden durch die mit einer Steckbuchse (22) ausgestattete Steckbuchsenvorrichtung (21) auseinandergehalten werden und deren äußere Enden einen größeren Abstand voneinander haben als die inneren Enden, und

wobei der Kontaktstift (27) gegenüberliegende, im Allgemeinen aufrechte Seitenflächen umfasst und die Steckbuchse (22) zwei aufrechtstehende Kontaktflächen (43) für das Erfassen des Kontaktstifts (27) und die Herstellung des elektrischen Kontakts mit einer entsprechenden aufrechten Seitenfläche des Kontaktstifts (27) umfasst, wobei die beiden Kontaktflächen (43) durch Federdruck mittels federnder Mittel zusammengedrückt werden,

und wobei die Tiefe der beiden aufrechten Kontaktflächen (43) mindestens das Zweifache der Tiefe des Kontaktstifts (27) beträgt, um einer Fehlausrichtung in der Vertikalen Rechnung zu tragen.

2. Bodenpflegegerät und Ladegerät nach Anspruch 1, wobei die Tiefe der beiden aufrechten Kontaktflächen (43) etwa das Dreifache der Tiefe des Kontaktstifts (27) beträgt, um einer Fehlausrichtung in der Vertikalen Rechnung zu tragen.

3. Bodenpflegegerät und Ladegerät nach Anspruch 1 oder 2, wobei die Tiefe der Führungsfläche (36) im Wesentlichen gleich der Tiefe der Steckbuchse (22) ist und der Abstand zwischen den äußeren Enden der Führungsflächen mindestens das $1\frac{2}{3}$- (1,67-)fache ihrer Tiefe beträgt.

4. Bodenpflegegerät und Ladegerät nach einem der vorgenannten Ansprüche, wobei das zweite der beiden Geräte den Kontaktstift stützende Mittel (28) enthält und ein freistehendes Ende (29) des Kontaktstifts (27) im Allgemeinen horizontal aus dem Gerät herausragt, wobei das freistehende Ende (29) des Kontaktstifts aus dem Gerät um eine erste Länge $l_1$ herausragt und der Rest des Kontaktstifts über eine zweite Länge $l_2$ durch die stützenden Mittel (28) gestützt wird, wobei $l_1/l_2 > 0,5$ ist, so dass der Kontaktstift stabil gestützt wird.

5. Bodenpflegegerät und Ladegerät nach Anspruch 4, wobei $l_1$ im Wesentlichen 25 mm und $l_2$ im Wesentlichen 85 mm beträgt.

6. Bodenpflegegerät und Ladegerät nach einem der vorgenannten Ansprüche, wobei zwei Kontaktstifte (27), zwei Steckbuchsen (22) und zwei Sätze von Führungsflächen (36) vorgesehen sind, um für das gleichzeitige Eingreifen der beiden Kontaktstifte in die zwei Steckbuchsen zu sorgen, und wobei die Kontaktstifte am Ladegerät (11) und die Führungsflächen (36) sowie die Steckbuchsen (22) am Bodenpflegegerät (10) vorgesehen sind.

7. Bodenpflegegerät und Ladegerät nach einem der vorgenannten Ansprüche, wobei, wenn das Bodenpflegegerät (10) am Ladegerät (11) angedockt ist, der oder jeder Kontaktstift (27) und die oder jede Steckbuchsenvorrichtung (21) von Teilen des Bodenpflegegeräts (10) und des Ladegeräts (11) so umgeben sind, dass sie vom Benutzer nicht berührt werden können.

**Revendications**

1. Appareil d'entretien de sol (10) et appareil de station de charge (11) associé, selon lesquels :

un premier des deux appareils supporte un appareil de prise de contact (21) comprenant une prise de contact (22) et

le second des deux appareils supporte une cheville de contact (27) qui s'étend généralement horizontalement depuis ledit appareil,

dans lesquels ledit appareil d'entretien de sol (10) et ledit appareil de station de charge (11) sont conçus de telle sorte qu'ils se déplacent ou soient déplacés pour venir en prise l'un avec l'autre et pour insérer ladite cheville de contact (27) dans ladite prise de contact (22) et, si les deux appareils sont mal alignés horizontalement, ladite cheville de contact (27) vient en contact avec une surface de guidage appropriée (36) de telle sorte que la cheville de contact (27) et la prise de contact (22) soient guidées relativement en prise, **caractérisés en ce que**

le premier des deux appareils supporte une paire de surfaces de guidage opposées sensiblement droites (36), dont les extrémités internes sont séparées par ledit appareil de prise de contact (21) comprenant une prise de contact (22) et dont les extrémités externes sont davantage éloignées que les extrémités internes, et

dans lesquels ladite cheville de contact (27) comprend des surfaces latérales opposées généralement droites et ladite prise de contact (22) comprend deux surfaces de contact droites (43) pour venir en prise et mettre en contact électriquement une surface latérale droite appropriée de ladite cheville de contact (27), les deux surfaces de contact (43) étant sollicitées à se rapprocher de manière élastique par des moyens élastiques,

et dans lesquels la profondeur des deux surfaces de contact droites (43) fait au moins deux fois la profondeur de la cheville de contact (27) pour permettre un désalignement vertical.

2. Appareil d'entretien de sol et appareil de station de charge selon la revendication 1, dans lesquels la profondeur des deux surfaces de contact droites (43) fait approximativement 3 fois la profondeur de la cheville de contact (27) pour permettre un désalignement vertical.

3. Appareil d'entretien de sol et appareil de station de charge selon la revendication 1 ou 2, dans lesquels la profondeur de ladite surface de guidage (36) est sensiblement la même que la profondeur de la prise de contact (22) et la distance entre les extrémités externes desdites surfaces de guidage fait au moins $1\,^2/_3$ (1,67) fois leur profondeur.

4. Appareil d'entretien de sol et appareil de station de charge selon l'une quelconque des revendications précédentes, dans lesquels le second desdits deux appareils comprend un moyen de support de cheville de contact (28) et une extrémité exposée (29) de ladite cheville de contact (27) s'étend généralement horizontalement depuis ledit appareil, ladite partie exposée (29) de ladite cheville de contact s'étendant depuis ledit appareil sur une première longueur (*l1*) et le reste de ladite cheville de contact étant supporté par ledit moyen de support (28) sur une seconde distance (*l2*), dans lesquels

$$l1/l2 < 0,5,$$

de telle sorte que la cheville de contact soit elle-même solidement supportée.

5. Appareil d'entretien de sol et appareil de station de charge selon la revendication 4, dans lesquels *l1* fait sensiblement 25 mm et *l2* fait sensiblement 85 mm.

6. Appareil d'entretien de sol et appareil de station de charge selon l'une quelconque des revendications précédentes, dans lesquels sont disposés deux chevilles de contact (27) ainsi que deux prises de contact (22) et deux ensembles de surfaces de guidage (36) pour fournir la mise en prise simultanée des deux chevilles de contact dans les deux prises de contact et lesdites chevilles de contact sont disposées sur ledit appareil de station de charge (11) et lesdites surfaces de guidage (36) ainsi que lesdites prises de contact (22) sont disposées sur ledit appareil d'entretien de sol (10).

7. Appareil d'entretien de sol et appareil de station de charge selon l'une quelconque des revendications précédentes, dans lesquels, lorsque l'appareil d'entretien de sol (10) est en prise avec l'appareil de station de charge (11), la cheville de contact ou chaque cheville de contact (27) et l'appareil de prise de contact ou chaque appareil de prise de contact (21), sont entourés par des parties de l'appareil d'entretien de sol (10) et de l'appareil de station de charge (11) de telle sorte qu'ils ne puissent pas être touchés par un utilisateur.

FIG. 1

Fig 2

EP 2 656 718 B1

Fig 3

EP 2 656 718 B1

Fig 4

11

Fig 5

Fig 6

Fig 7

Fig 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5272431 A, Nee